# EUROPÄISCHE PATENTSCHRIFT

(11) **EP 0 658 398 B1**
(45) Veröffentlichungstag und Bekanntmachung des Hinweises auf die Patenterteilung: **06.06.2001**
(21) Anmeldenummer: 94810501.0
(22) Anmeldetag: 01.09.1994
(51) Int. Cl.: B23Q 1/58, B23Q 1/01, F16C 29/00, F16C 29/04

(54) **Führungsschiene**
Guide rail
Rail de guidage

(30) Priorität: 19.11.1993 DE 4339541
(43) Veröffentlichungstag der Anmeldung: 21.06.1995
(73) Patentinhaber: HILTI Aktiengesellschaft, 9494 Schaan (LI)
(72) Erfinder: Reitberger, Rudolf, D-81379 München (DE)
(74) Vertreter: Wildi, Roland

(56) Entgegenhaltungen:
- DE-A- 3 734 922
- DE-A- 4 118 479
- FR-A- 2 384 989
- US-A- 2 907 610
- PATENT ABSTRACTS OF JAPAN vol. 7, no. 89 (M-207) (1234) 13. April 1983 & JP-A-58 013 224 (NOBUYUKI) 25. Januar 1983

## Beschreibung

Die Erfindung betrifft eine Führungsschiene für Bohr-, Trenn- und Schleifgeräte mit zwei ersten Paaren von V-förmig zueinander stehenden, nebeneinander an einer ersten Aussenseite der Führungsschiene angeordneten, sich entlang der Schienenlängsachse erstreckenden Führungsflächen und einer in einer Vertiefung der ersten Aussenseite angeordneten, parallel und in Längsrichtung zur Mittelachse der Führungsschiene verlaufenden Zahnleiste, wobei die von den V-förmig zueinander stehenden Führungsflächen gebildeten Öffnungen zur ersten Aussenseite der Führungsschiene hin zunehmen.

Es hat sich gezeigt, dass bei handgeführten Bohr-, Trenn- und Schleifgeräten während der Bearbeitung eines Untergrundes wie Beton, Mauerwerk, Gestein und dgl. grosser Materialverlust durch Bruch- und Ausschuss auftritt, da ein genaues und sicheres Führen der Geräte von Hand nicht möglich ist Ausserdem besteht für die Bedienungsperson eine erhebliche Unfallgefahr, wenn beispielsweise ein Gerät beim Verkanten des Werkzeuges in Eigenrotation gerät.

Aus diesem Grund wurde bereits eine Führungsvorrichtung entwickelt, die aus dem DE-GM 9204693 bekannt ist. Diese bekannte Führungsvorrichtung weist eine Führungsschiene auf, die auf einem Sockel festgeklemmt ist. Diese Führungsschiene zeigt zwei Paare von V-förmig zueinander stehenden, nebeneinander an einer dem Sockel gegenüberliegenden Aussenseite der Führungsschiene angeordneten, sich entlang der Schienenlängsachse erstreckenden Führungsflächen. Die von den V-förmig zueinander stehenden Führungsflächen gebildeten Oeffnungen nehmen zur Aussenseite der Führungsschiene hin zu. Ein entlang der Führungsschiene verschiebbarer Führungsschlitten greift mit nebeneinander angeordneten, dachförmig ausgebildeten Gleitelementen in die beiden Paare der Führungsflächen. An den Führungsschlitten im vorliegenden, bekannten Falle ist eine Gesteinsbearbeitungsmaschine anbaubar. Um das Abheben des Führungsschlittens von der Führungsschiene zu verhindern, sind an dem Führungsschlitten Stützrollen angeordnet, die in seitliche Ausnehmungen der Führungschiene ragen und sich an Stützflächen abstützen, die im wesentlichen auf der Unterseite der beiden Paare von Führungsflächen verlaufen.

Bei einer freistehenden, im wesentlichen rechtwinklig von der Oberfläche eines Untergrundes abragenden Anordnung der bekannten Führungschiene entstehen hohe Kräfte, welche von einem an dem Führungsschlitten angeordneten Gerät erzeugt werden. Diese Kräfte greifen einseitig an der Führungsschiene an. Eine Verteilung der Kräfte auf den gesamten Querschnitt der Führungsschiene ist nicht gewährleistet. Eine Umsetzung des Führungsschlittens in Umfangsrichtung der Führungsschiene um 180° ist ebenfalls nicht gewährleistet.

Der Erfindung liegt die Aufgabe zugrunde, eine Führungschiene zu schaffen, an der verschiedene Führungsschlitten mit unterschiedlich ausgebildeten Führungsbereichen anordbar sind, an der eine Umsetzung des Führungsschlittens um 180° gewährleistet ist und die eine ausreichende Verteilung der auftretenden Kräfte auf den Querschnitt gewährleistet.

Erfindungsgemäss wird dies bei einer Führungsschiene der eingangs genannten Art dadurch erreicht, dass den zwei ersten Paaren von Führungsflächen zwei zweite Paare von V-förmig zueinander stehenden Führungsflächen im wesentlichen symmetrisch gegenüberliegen, die nebeneinander an einer zweiten Aussenseite der Führungsschiene angeordnet sind und sich entlang der Schienenlängsachse erstrecken.

Durch die erfindungsgemässe Ausgestaltung der Führungsschiene kann bei freistehender Anordnung ein Führungsschlitten verwendet werden, der entsprechend der Anordnung der V-förmig zueinander stehenden Führungsflächen Führungselemente, beispielsweise in Form von Führungsrollen aufweist, so dass jene Kräfte, die durch das Kippmoment und Drehmoment eines an dem Führungsschlitten angeordneten Gerätes hervorgerufen werden, über zwei sich gegenüberliegende Aussenseiten auf den gesamten Querschnitt der Führungsschiene übertragen werden. Da der Abstand zwischen den beiden ersten Paaren und den beiden zweiten Paaren im wesentlichen identisch ist mit dem Durchmesser bzw. der Breite einer Seite der Führungsschiene, wird eine grosse Führungsstabilität des Führungsschlittens gewährleistet. Parallel und im wesentlichen rechtwinklig zur Längsrichtung der Führungsschiene auftretende Kräfte erfahren eine besonders gute Abstützung.

Damit die erfindungsgemässe Schiene vorzugsweise für verschiedene Führungsschlitten Verwendung findet, verläuft senkrecht zu einer ersten Symmetrieachse der ersten und zweiten Paare von Führungsflächen eine weitere Symmetrieachse, zu welcher beidseits wenigstens je ein weiteres Paar von Führungsflächen angeordnet ist, wobei die Führungsflächen geneigt zueinander stehen und sich entlang der Schienenlängsachse erstrecken. Die Führungsflächen der weiteren Paare von Führungsflächen können dachförmig nach aussen oder V-förmig nach innen gerichtet zueinander stehen. Bei dachförmig nach aussen gerichteten Führungsflächen bilden Scheitelpunkte der weiteren Paare von Führungsflächen die grösste Aussenkontur der Führungsschiene.

Aus herstellungs- und kraftangriffstechnischen Gründen liegen die Scheitelpunkte der weiteren Paare von Führungsflächen zweckmässigerweise auf derselben senkrecht zu deren Symmetrieachse verlaufenden Ebene.

Damit der Führungsbereich des Führungsschlittens bezüglich der Baugrösse kleiner gehalten werden kann, ist es vorteilhaft, wenn die weiteren Paare von Führungsflächen im Bereich der zwei ersten Paare von Führungsflächen angeordnet sind.

Die Führungsschiene kann als Hohlprofil ausgebildet sein. Dies bietet neben herstellungtechnischen Vorteilen auch gewichtsmässige Vorteile.

Die Führungsschiene eignet sich für die Befestigung zweier verschiedenartig ausgebildeter Führungsschlitten, die jeweils mit ihren Führungselementen an zwei sich einander gegenüberliegenden Aussenseiten der Führungsschiene angreifen. Je nach Anwendungsfall bedarf es insbesondere beim Trennen oder Schleifen der Anordnung der Führungsschiene parallel oder insbesondere beim Bohren im wesentlichen senkrecht zur Oberfläche eines Untergrundes.

Bei der horizontalen Anordnung der Führungsschiene kommt ein Führungsschlitten zum Einsatz, der mit seinen Führungselementen mit den weiteren Paaren von Führungsflächen zusammenwirkt. Bei der zum Bohren freistehenden Anordnung der Führungsschiene kommt ein Führungsschlitten zum Einsatz, dessen Führungselemente mit den zwei ersten und den zwei zweiten Paaren von Führungsflächen zusammenwirken.

Sämtliche Führungsflächen können gehärtet sein, eine harte Beschichtung aufweisen oder mit harten Plättchen versehen sein.

Die Erfindung wird anhand einer Zeichnung, die ein Ausführungsbeispiel wiedergibt, näher erläutert.

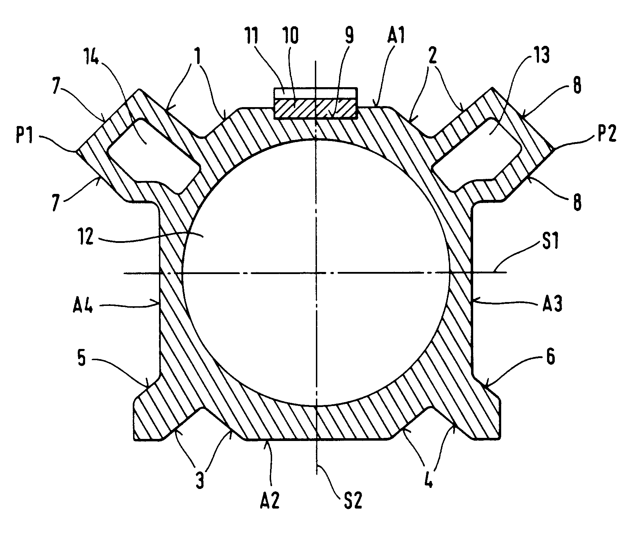

Die Zeichnung zeigt eine Ansicht des Querschnittes einer erfindungsgemässen Führungsschiene, die als Hohlprofil ausgebildet ist. Neben einem sich in Längsrichtung der Führungsschiene erstreckenden, zentral angeordneten Hohlraum 12 mit rundem Querschnitt sind zwei weitere Hohlräume 13, 14 vorhanden, die sich ebenfalls in Längsrichtung der Führungsschiene erstrecken. Die Führungsschiene besteht im wesentlichen aus vier rechtwinklig zueinander verlaufenden Aussenseiten A1, A2, A3, A4, wobei an der Aussenseite A1 in einer Vertiefung 9 eine Zahnleiste 10 angeordnet ist, die parallel und in Längsrichtung zur Mittelachse der Führungsschiene verläuft. Die Länge der Zahnleiste 10 entspricht wenigstens teilweise der Gesamtlänge der Führungsschiene und besitzt eine zahnartige Profilierung 11. Die Aussenseite A1 besitzt zwei erste Paare von V-förmig zueinander stehenden, nebeneinander angeordneten, sich entlang der Schienenlängsachse erstreckenden Führungsflächen 1, 2, wobei die von diesen Führungsflächen 1, 2 gebildeten Oeffnungen zur Aussenseite A1 der Führungsschiene hin zunehmen. Diesen beiden ersten Paaren von Führungsflächen 1, 2 liegen zwei zweite Paare von V-förmig zueinander stehenden Führungsflächen 3, 4 im wesentlichen symmetrisch gegenüber. Diese beiden zweiten Paare von Führungsflächen 3, 4 sind ebenfalls nebeneinander angeordnet und erstrecken sich entlang der Schienenlängsachse.

Im Bereich der zwei zweiten Paare von Führungsflächen 3, 4 weist die Führungsschiene Klemmflächen 5, 6 auf, die sich ebenfalls in Längsrichtung der Führungsschiene erstrecken. Diese Klemmflächen 5, 6 dienen dem Angriff von nicht dargestellten Klemmelementen, mit denen die Führungsschiene an einem ebenfalls nicht dargestellten Untergrund festgelegt werden kann. Auf diese Weise ist es möglich, die erfindungsgemässe Führungsschiene an einem Untergrund derart zu befestigen, dass die Aussenseite A2, an der die zwei zweiten Paare von Führungsflächen 3, 4 angeordnet sind, auf der Oberfläche des Untergrundes zu liegen kommt. Bei einer derartigen Festlegung der Führungsschiene kommen Führungsschlitten für Trenn- und Schleifwerkzeuge zum Einsatz, die im Bereich der rechtwinklig zum Untergrund verlaufenden Aussenseiten A3, A4 - an den weiteren Paaren von Führungsflächen 7, 8 - der Führungsschiene angreifen.

An der Aussenseite A1 der Führungsschiene ist eine Zahnstange 10, welche sich wenigstens teilweise über die gesamte Länge der Führungsschiene erstreckt, parallel zur Mittelachse und in Längsrichtung der Führungsschiene angeordnet.

Die beiden Aussenseiten A3, A4 der Führungsschiene sind mit zwei weiteren Paaren von Führungsflächen 7, 8 versehen, die im wesentlichen dachförmig zueinander angeordnet sind.

Eine Symmetrieachse S2 der beiden weiteren Paare von Führungsflächen 3, 4 verläuft im rechten Winkel zu einer Symmetrieachse S1 der zwei ersten und zwei zweiten Paare von Führungsflächen 1, 2, 3, 4. Die Scheitelpunkte P1, P2 der weiteren Paare von Führungsflächen 7, 8 liegen auf einer Ebene, die senkrecht zu deren Symmetrieachse S2 verläuft. Die weiteren Paare von Führungsflächen 7, 8 sind im Bereich der zwei ersten Paare von Führungsflächen 1, 2 angeordnet.

## Patentansprüche

1. Führungsschiene für Bohr-, Trenn- und Schleifgeräte mit zwei ersten Paaren von V-förmig zueinander stehenden, nebeneinander an einer ersten Aussenseite (A1) der Führungsschiene angeordneten, sich entlang der Schienenlängsachse erstreckenden Führungsflächen (1, 2) und einer in einer Vertiefung (9) der ersten Aussenseite (A1) angeordneten, parallel und in Längsrichtung zur Mittelachse der Führungsschiene verlaufenden Zahnleiste (10), wobei die von den V-förmig zueinander stehenden Führungsflächen (1, 2) gebildeten Öffnungen zur Aussenseite (A1) der Führungsschiene hin zunehmen, **dadurch gekennzeichnet**, dass den zwei ersten Paaren von Führungsflächen (1, 2) zwei zweite Paare von V-förmig zueinander stehenden Führungsflächen (3, 4) im wesentlichen symmetrisch gegenüberliegen, die nebeneinander an einer zweiten Aussenseite (A2) der Führungsschiene angeordnet sind und sich entlang der Schienenlängsachse erstrecken.

2. Führungsschiene nach Anspruch 1, dadurch gekennzeichnet, dass senkrecht zu einer ersten Symmetrieachse (S1) der ersten und zweiten Paare von Führungsflächen (1, 2, 3, 4) eine weitere Symmetrieachse (S2) verläuft, zu welcher beidseits wenigstens je ein weiteres Paar von Führungsflächen (7, 8) angeordnet ist, wobei die Führungsflächen (7, 8) geneigt zueinander stehen und sich entlang der Schienenlängsachse erstrecken.

3. Führungsschiene nach Anspruch 2, dadurch gekennzeichnet, dass die Scheitelpunkte (P1, P2) der weiteren Paare von Führungsflächen (7, 8) auf derselben senkrecht zu deren Symmetrieachse (S2) verlaufenden Ebene liegen.

4. Führungsschiene nach Anspruch 2 oder 3, dadurch gekennzeichnet, dass die weiteren Paare von Führungsflächen (7, 8) im Bereich der zwei ersten Paare von Führungsflächen (1, 2) angeordnet sind.

## Claims

1. Guide rail for drilling, separating and grinding tools, comprising two first pairs of guide surfaces (1, 2), which are positioned V-shaped relative to each other alongside each other on a first outside (A1) of the guide rail and extending along the longitudinal rail axis, and a toothed rack (10), which is arranged in a recess (9) of the first outside (A1) and extending parallel and in the longitudinal direction of the centre axis of the guide rail, and openings formed by guide surfaces (1, 2) positioned V-shaped relative to each other increase towards the outside (A1) of the guide rail, **characterised in that** opposite the first two pairs of guide surfaces (1, 2) are positioned essentially symmetrically opposite thereto two pairs of guide surfaces (3, 4) positioned V-shaped relative to each other and arranged to extend alongside each other on a second outside (A2) of the guide rail and along the longitudinal axis of the rail.

2. Guide rail according to Claim 1, **characterised in that** vertically to a first symmetry axis (S1 o the first and second pairs of guide surfaces (1, 2, 3, 4) extends a further symmetry axis (S2) on both sides of which is arranged at least one each additional pair of guide surfaces (7, 8), and the guide surfaces (7, 8) are positioned inclined towards each other and extending along the longitudinal axis of the rail.

3. Guide rail according to Claim 2, **characterised in that** the vertex points (P1, P2) of the additional pairs of guide surfaces (7, 8) lie on the same plane extending vertically to their symmetry axis (S2).

4. Guide rail according to Claim 2, or 3, **characterised in that** the additional pairs of guide surfaces (7, 87) are arranged in the area of the two first pairs of guide surfaces (1, 2).

## Revendications

1. Rail de guidage pour outils de forage, de tronçonnage et de meulage, comportant deux premières paires de surface de guidage (1, 2) disposées en V l'une par rapport à l'autre et juxtaposées sur un premier côté extérieur (A1) du rail de guidage et s'étendant le long de l'axe longitudinal du rail, ainsi qu'une baguette dentée (10) disposée dans un renfoncement (9) du premier côté extérieur (A1) et s'étendant parallèlement à l'axe médian du rail de guidage et dans sa direction longitudinale, les ouvertures formées par les surfaces de guidage (1, 2) disposées en V l'une par rapport à l'autre augmentant vers le côté extérieur (A1) du rail de guidage, caractérisé en ce qu'aux deux premières paires de surfaces de guidage (1, 2) font face sensiblement symétriquement deux deuxièmes paires de surfaces de guidage (3, 4) disposées en V l'une par rapport à l'autre, qui sont juxtaposées sur un deuxième côté extérieur (A2) du rail de guidage et qui s'étendent le long de l'axe longitudinal du rail.

2. Rail de guidage selon la revendication 1, caractérisé en ce que perpendiculairement à un premier axe de symétrie (A1) de la première et de la deuxième paires de surfaces de guidage (1, 2, 3, 4) s'étend un autre axe de symétrie (S2) sur chacun des deux côtés duquel est disposée au moins une autre paire de surfaces de guidage (7, 8), les surfaces de guidage (7, 8) étant inclinées l'une par rapport à l'autre et s'étendant le long de l'axe longitudinal du rail.

3. Rail de guidage selon la revendication 2, caractérisé en ce que les sommets (P1, P2) des autres paires de surfaces de guidage (7, 8) se situent sur le même plan qui est perpendiculaire à leur axe de symétrie (S2).

4. Rail de guidage selon la revendication 2 ou 3, caractérisé en ce que les autres paires de surfaces de guidage (7, 8) sont disposées dans la zone des deux premières paires de surfaces de guidage (1, 2).
